# EUROPEAN PATENT SPECIFICATION

(11) **EP 1 267 544 B1**
(45) Date of publication and mention of the grant of the patent: **22.03.2006**
(21) Application number: 01302382.5
(22) Date of filing: 14.03.2001
(51) Int. Cl.: H04L 29/06, H04L 29/08

(54) **Access to information networks**
Zugriff auf Informationsnetzwerke
Accès à des réseaux d'informations

(43) Date of publication of application: 18.12.2002
(73) Proprietor: NCR INTERNATIONAL INC., Dayton, Ohio 45479 (US)
(72) Inventor: Waller, Michael, London NW11 oDG (GB); Ward, Matthew Ashley, London W10 6JB (GB)
(74) Representative: Cleary, Fidelma

(56) References cited:
- EP-A- 1 009 137
- WO-A-98/59506
- US-A- 5 926 116

## Description

This invention relates to access to information networks, notably the Internet or an intranet, by mobile devices, for example mobile telephones, hand-held computers and other suitably-enabled wireless communications devices. for business partners to exchange information.

The background to the invention is the expansion of the Internet into mobile personal communications, for example by virtue of the Wireless Application Protocol (WAP) that is generating a proliferation of portable Internet-enabled devices. This technology is currently embodied in discrete hand-portable devices such as mobile telephones, palmtop computers and electronic personal organisers. However, it is to be expected that future communications devices will integrate more functions into a single unit such as a personal digital assistant, become smaller, be dispersed about the user's body or be constituted in wearable form such as a wristwatch, a pair of spectacles or even as part of a user's clothing. Increasingly, therefore, having mobile communications devices about one's person will become as much a part of everyday life as wearing a pair of shoes.

Change is also being seen in the ways in which information is presented to the user. As users come to terms with the mass of information that is available online, particular efforts are being made to filter irrelevant or otherwise unwanted information and moreover to personalise the information that is presented to the user. The aim is to foresee the user's information needs by reacting to the user's browsing activity, for example by referring to records of the user's past browsing habits. A particular example of this tailoring of information is in the presentation of 'click-through' or 'banner' advertising, and more generally in the presentation of links that relate to the subject of the web page that the user is viewing or searching for.

Despite the seemingly boundless possibilities of the Internet, it does a disservice to the portability and sheer utility of mobile communications devices that they should be fed much the same diet of information as is presented to a static terminal.

Many of the varying experiences of day-to-day life relate to one's changing geographical location and especially the things that one sees, hears and experiences when at those different locations. As different experiences create different information needs, it follows that one's information needs also vary with geographical location. The faster a user travels and the more places the user visits, the greater the need for responsiveness in the information supply technologies upon which the user relies. Here, existing technologies fail to cope.

By way of illustration, imagine that a user of a WAP-enabled device such as a mobile telephone is a tourist riding on a sightseeing tour bus around London. That user sees a sight of particular interest, for example the National Gallery, and wants to know more about it. Using the WAP telephone, the user launches a browser, accesses the Internet, conducts a search using a suitable search engine and eventually (signal permitting) accesses the National Gallery's website. By this time, however, the bus has moved on past other tourist attractions, which the user has missed while browsing the Internet, and has reached another attraction that also interests the user and so makes the National Gallery information redundant. The user has also missed the fact that had he or she looked in the opposite direction when looking at the National Gallery, there would have been a good view of Trafalgar Square and Nelson's Column. These attractions could well have been more interesting to the user than the National Gallery ever was.

It will be apparent from scenarios such as this that existing technologies fail to satisfy a user's changing real-time information needs as he or she moves from place to place in daily life. The problem is not one of miniaturisation, access speed or some other hardware issue: it is about a more fundamental difficulty with the way in which information is selected from the Internet for supply to a mobile user of a portable Internet-access device. To treat that device as merely a portable version of a static terminal is to deny possibilities that are unique to mobile devices, particularly their potential to respond to and to support a mobile user's changing information needs.

Another way in which existing mobile communications devices fail to achieve their potential is in the creation of a personalised space around the user. Static browsing terminals such as home PCs have increasingly large, high-definition displays and high-quality sound facilities that are designed to immerse the user in a virtual environment of their own making. Apart from enabling the user to enjoy a rich multi-sensory experience in the subject of interest, a user thus engaged is an excellent target for advertising.

Existing mobile communications devices cannot compete with this level of user involvement. This is partly due to limitations of display size and so on, but is largely because existing mobile communications devices try to emulate a static terminal rather than using the potential of mobility and portability to create new and advantageous communications concepts.

The present invention resides in the insight that a mobile and preferably hand-portable device communicating with an information network can tailor the information it presents to a user in accordance with its geographical position and optionally also its orientation, direction, altitude and/or other inputs such as the time of day. More generally, the device and the information network are parts of a system and provided that the position, orientation and so on are known to the system as a whole, either by independently determining the position of the device or by receiving spatial data from the device, the information can be tailored by parts of the system other than the device itself. However, it is simpler that the device calls for the information it deems necessary from the information network, with reference to self-measured spatial data.

The information thus presented to the user may be thought of as tailored spatial information. In the Internet context, the information would be expressed as spatial web pages or spatial URLs defined by (i) the quadrant or location in which the user and the associated communications device are located and (ii) the URL channel. An optional further defining factor is (iii) the orientation or direction of the user and the associated device. Once the device has this spatial data comprising its location and optionally also its orientation, it can be configured automatically to open a spatially-specific URL.

The web page thus accessed can relate in several beneficial ways to the location/orientation of the user and hence to whatever the user might be doing at that location. In this way, the invention brings value to the user and to businesses who supply the user, or would like to do so. The invention contemplates the creation of spatial URL channels that underpin numerous facilities such as branded space, the opportunity for e-business to have spatial real estate, a practically infinite number of web channels located in the same place, educational spatial information, entertainment information systems, signage, billboards and advertising, and live transportation signage.

There are various ways in which a communications device can know its position and hence tailor the information it presents accordingly. At the most basic level, the user can tell the device where it is, assuming of course that the user knows this information, and the device can respond to this input in a pre-determined way by, for example, selecting web pages relevant to that location. Preferably, however, the user is taken out of the locating process so that the device calculates its own location using the geostationary satellite network of the Global Positioning System (GPS) or by radio-triangulation of communications signals received by the device. For example, from 2002, the United States government will be enforcing a positioning system for mobile telephone users through triangulation from the transmitters that serve those telephones. The primary purpose of this system is to enable emergency services to locate and assist mobile telephone users who do not know their location, but the invention provides an alternative and beneficial use of this infrastructure.

Location by means such as triangulation can be performed either by the communications device itself or by the system that transmits to the device. If the latter, the resulting location can be transmitted to the device or can be used independently to tailor the information that is made available to the device or that is sent to the device.

GPS and triangulation methods enable location in three dimensions, and so allow a device automatically to calculate its altitude or elevation above sea level, or indeed its depth, if underwater.

Again, orientation could be input by a user (if the user knows the orientation) or could be calculated by triangulation techniques, but it is best derived automatically from a bearing signal generated by an electronic compass within the device. A time signal, if required, will generally be available inherently within the device.

US 5,926,116 discloses a mobile information retrieval apparatus and method, in which a CPU controls a video camera and the information provided to the apparatus is dependent on the images provided to the CPU by the apparatus. The image from the apparatus would include, for example, an image of the name of a restaurant and the information provided to the apparatus would include a link to the web site associated with the restaurant. Hence the information provided to the apparatus is dependent on the location of the apparatus. The independent claims in the present specification are characterised based on this document.

W098/59506 describes an apparatus and method in which a traveller in an unfamiliar location can access information on that location, based on, for example, GSM data.

According to a first aspect of the present invention there is provided a method of accessing information on an information network accessible by a mobile communications device, comprising determining the location of the device and tailoring the information supplied to a user in accordance with that location, characterised by determining the orientation of the device about a vertical axis and tailoring the information in accordance with that orientation wherein the vertical axis is defined by a line passing vertically through the device (10) at said location and providing a frame of reference to determine in which direction the device (10) is facing.

According to a second aspect of the present invention there is provided a mobile communications device for accessing information on an information network, the device comprising means for determining its location for use in tailoring the information supplied to a user in accordance with that location characterised by means for determining its orientation about a vertical axis for use in tailoring the information supplied to a user in accordance with that orientation wherein the horizontal axis is defined by a line passing horizontally through the device (12) at said location, providing a frame of reference to determine the elevation of the direction in which the device (10) is facing. In this specification, 'location' is intended to mean the position of the user, and the hence the position of a communications device carried by the user, on such a scale that the position varies in ordinary day to-day life, for example upon travelling along a street within a city, rather than merely being in a particular country or in a region of that country.

It should also be understood that the term 'information network' is this specification is intended to include the Internet, an intranet and an extranet. An extranet is essentially an intranet that is partially accessible to authorized outsiders. Whereas an intranet resides behind a firewall and is accessible only to people who are members of the same company or organization, an extranet provides various levels of accessibility to outsiders. You can access an extranet only if you have a valid username and password, and your identity determines which parts of the extranet you can view. Extranets are becoming a very popular means for business partners to exchange information.

Some optional features have been set out above. Others will be evident from the appended claims.

In order that the invention can be more readily understood, reference will now be made, by way of example, to the accompanying drawings in which:
Figure 1 is a schematic plan view of a user equipped with a web-enabled communications device in accordance with the invention, the user being in a spatial quadrant defined by GPS or by radio triangulation, and showing how different URLs can be accessed simply by changing orientation of the device while in that quadrant;
Figure 2 is a sketch of a communications device of the invention being used to overlay visual information on a building visible along a particular bearing from the spatial quadrant in which the device is situated; and
Figure 3 is a sketch of another communications device of the invention being used to present sound information about a building visible along a particular bearing from the spatial quadrant in which the device is situated.

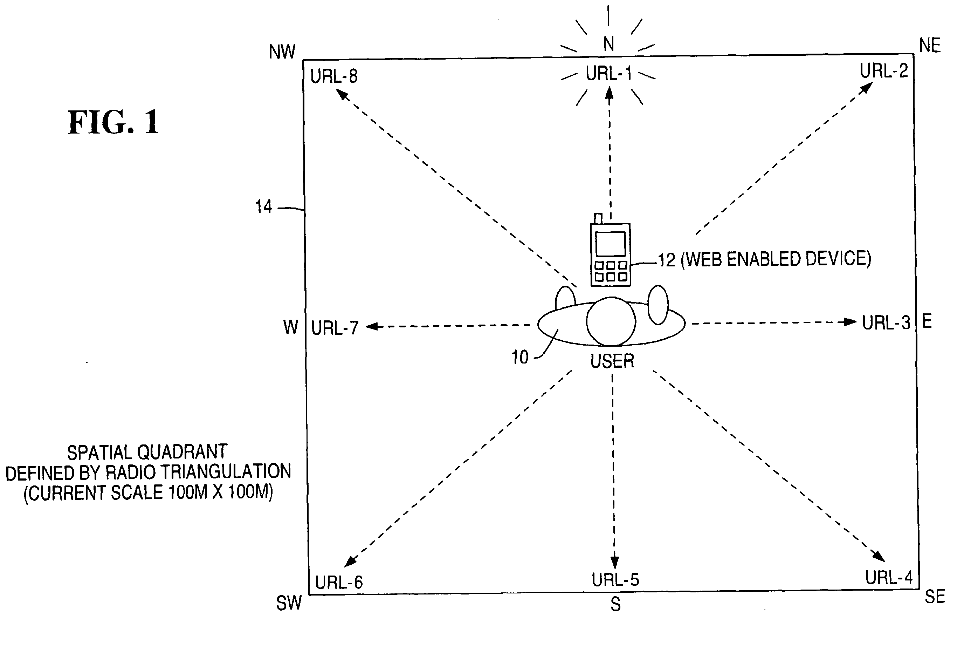

Referring firstly to Figure 1 of the drawings, a user 10 holding a web-enabled mobile communications device 12 is located within a spatial region 14 or cell defined by the positional resolution of a GPS system or radio triangulation system. The resolution of GPS and hence the diameter of the region 14 in which the user is known to be located is in the region of 30 metres. The corresponding figure for radio triangulation is in the region of 100 metres.

The device 12 uses GPS or radio triangulation to determine its approximate position within the abovementioned tolerances, thereby to identify the region 14 in which it is located. The device 12 also has an integral electronic compass (not shown) to determine its orientation within that region 14, for example facing north as shown in the illustration. It will be understood that any specified orientation involves the user 10 facing the direction of orientation with the device 12 held straight in the natural reading position in front of the user 10, like a compass or a book.

Thus, when located in the region 14 and held by the user 10 as shown in Figure 1, the device 12 knows that it is in region 14 and that it is pointing north. Means responsive to that position and orientation launch browser functionality within the device 12 to download and display a web page located at a first URL, namely URL-1, that is associated with the northerly orientation. Thus, for example, if a particular attraction such as a cathedral is visible to the north of region 14, URL-1 is suitably a website relating to that attraction.

In the example shown in Figure 1, there are eight URLs (URL-1 to URL-8) each associated with a respective one of the points of the compass (N, E, S, W) and the intermediate headings between them (NE, SE, SW and NW). There could of course be more or less than eight URLs. Thus, as the user 10 turns within region 14 and so changes the orientation of the device 12, each respective URL is accessed and the related web page displayed. So if, for example, a particular mountain can be seen on the south-west horizon when viewed from region 14, a website at URL-6 could be downloaded and displayed to tell the user about the rock-climbing opportunities there.

Used in this way, a device 12 such as a web-enabled mobile telephone or other similar device has a mobile 'point and push' facility, whereby the user can simply point and activate the device, which in turn downloads or stores a web page.

The device 12 can store a plurality of URLs in an on-board look-up table to be accessed at different locations and orientations as the user carries the device 12 around. However, for maximum flexibility, it is preferred that the choice of URL is determined wholly or partially by the system of which the device 12 is a part. Thus, for example, the device 12 makes its location known to an information network when requesting an information resource, and the network selects a resource or set of resources appropriate to both the location and the nature of the information requested.

So, preferred embodiments of the invention provide for layers of information channels at each region 14, each channel being directed to a different type of information that might be requested at a given location. In other words, much like web domains, two- or three-dimensional spaces can be divided into channels that provide particular categories of information pertinent to different users of that space. For example, in a city location, a 'tourist' channel can be used by tourists to obtain information on tourist attractions at or around that location, in the manner described previously. A 'pedestrian' channel can be used to tell pedestrians (whether tourists or not) about practicalities of pedestrian life at or around that location, such as the timetable of a local bus service or the menu of a local restaurant. A 'motorist' channel can be used by drivers passing through that location as an aid to navigation and parking.

To maximise its usefulness to different types of user 10, it is envisaged that a device 12 would have means for viewing, selecting and switching between whatever channels are available at a particular location. Once accessed by a user who specifies the channel of interest, each channel suitably provides a set of URLs selected in accordance with the orientation of the device 12 as before, although control elements such as a touch-screen overlay, buttons, keys, trackballs, joysticks and so on can be employed on the device to provide additional control of browser functionality.

Whilst it is possible for the device 12 to display information on a traditional display such as an opaque LCD screen, preferred embodiments of the invention employ a transparent LCD display on which the active pixels that form images are visible by virtue of their opacity. In this way, blank areas of the display can be left transparent to enable an attraction such as a building or object on an appropriate heading to be viewed through the display, with information on that attraction overlaid or shown juxtaposed to the visible image of it. Aside from the convenience and usefulness of this display technique, holding the device 12 with its display oriented to enable viewing in this way serves to orient the device 12 itself both accurately and reliably so as to access relevant information appropriate to that orientation.

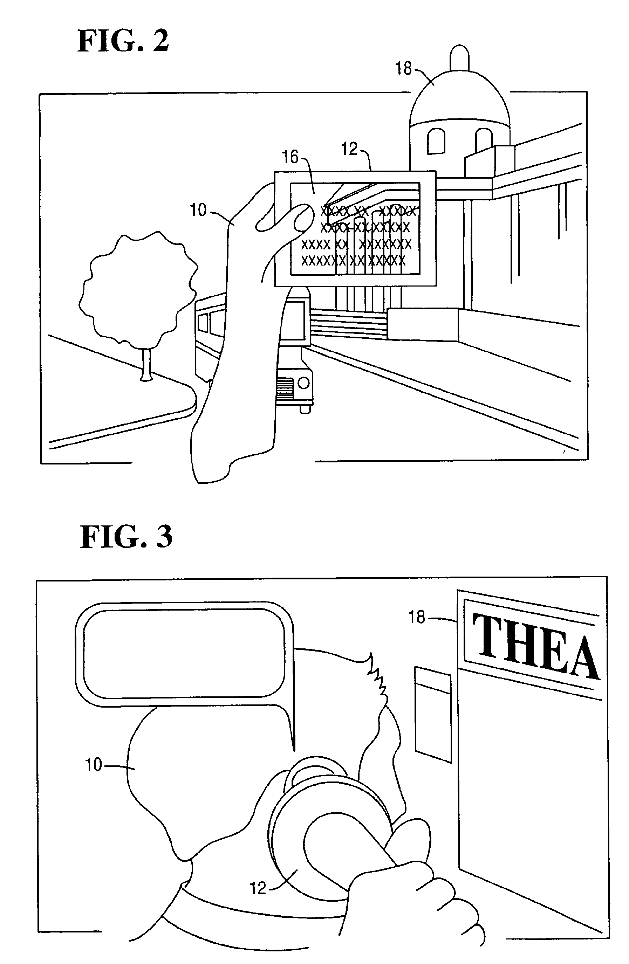

An example of the use of a transparent display is shown in Figure 2, in which a user 10 holds a device 12 equipped with a transparent display 16 in that user's line of sight to an attraction 18, in this case the National Gallery in London. The display 16 overlays information identifying the attraction 18 and gives subsidiary information, in this case its opening hours. The displayed information could take the form of text, graphics or a three-dimensional object overlaid in space. With suitable earphone or speaker facilities, the displayed information can be supplemented by sound information.

It is also possible for sound information to take precedence over a visual display, as shown in Figure 3 where a device 12 held to the ear of a user 10 looking at an attraction 18 (in this case a theatre) plays a relevant sound file to the user 10. This sound file may, for example, be a review of a show due to take place at that theatre or some historical information about the theatre building itself.

As mentioned above, an important use of tailored information is in advertising. Similarly importantly, preferred embodiments of the invention provide for virtual advertisements giving advertisers the opportunity to advertise in physical spaces that can be viewed by or (with a transparent screen) through a device 12. In an Internet context, this creates a new form of spatial web real estate.

Thus, a company could have a virtual dynamic poster or billboard that is viewable by or through a device 12 when at a particular location, in addition to or instead of a physical advertising medium such as a poster or billboard at that location. It is even possible that when a transparent-screen device 12 is held up to view a physical advertising medium, the device modifies or adds to the advertising information already displayed on the physical medium. This can be used by an advertiser to increase the impact of the combined advertising message, or even to 'overwrite' the message of a competitor's physical advertising medium with the advertiser's own message.

More generally, this concept can be thought of as 'attaching' virtual objects to real objects, and has correspondingly general application. For example, a virtual object like a dynamic bus map could be attached to a physical bus stop timetable. This principle could be applied to many different objects and locations, and this type of association could relate to many different types of space. For instance, a narrative concerning a park space creates associations with its users, who may perhaps be interested in environmental conservation. The narrative could therefore contain links to various sources of information on environmental topics.

One possible objective of the invention is the creation of a virtual information 'kiosk' around the user's location, at which information pertinent to that location is brought to the fore against other such other information as may be available to the user. Unlike physical information kiosks, the virtual kiosk takes up no physical space, moves with the user, provides information that can be tailored by means of channels and so on to the user's preferences and needs, and in any event tailors itself to the user's adapting information requirements as the user moves around in physical space.

The invention also enables a user to make purchases on-line, for example by deducting electronic cash held by the device or by authorising a transaction from the user's bank account. This may be in response to advertisements presented to the user by the device and can be triggered by a purchase command that is entered by the user or generated by the user's movements with the device. Thus, the invention contemplates charging for access through a virtual toll gate, enabling charges to be debited from the user if the user passes through a space or threshold while carrying the device. For example, going back to the National Gallery scenario of Figure 2, a user seeing the opening hours displayed on the device might decide to pay the gallery a visit. If the gallery charges for access, the user can be told there and then that an admission charge will be debited automatically if the user chooses to enter the gallery carrying the device. The user can then simply walk in, paying for entry without having to queue for a ticket.

In view of the positional coarseness of GPS and triangulation systems, the invention contemplates devices that firstly establish a way-point as a datum using GPS or triangulation to locate themselves, that optionally also use a compass bearing to determine their orientation, and then use technology such as an accelerometer to determine position more accurately by virtue of movements from that datum. Suitable accelerometers can track absolute position or the rate of change of position (i.e. velocity) and this data can be used as a further defining characteristic of the information that is accessed by the device. For example, the device need not be responsive only to orientation about a vertical axis in the sense of a compass bearing, but could also or alternatively be responsive to orientation about a horizontal axis so that information is tailored in accordance with the tilt of the device about that axis. Thus, a user looking upwardly through a transparent display of the device at something above the user would tend to tilt the device one way about the horizontal, whereas a user looking downwardly through the display at something below the user would tend to tilt the device the other way. Different information resources such as different URLs can be accessed as a result of these different orientations.

Aspects of the invention contemplate the development of a new computer language akin to HTML or XML but adapted to handle three-dimensional space. Thus, as a user moves a device through physical space, he/she would move through a program written in the new language.

Users of devices according to the invention can interact and communicate with each other in novel ways. For example, a first user can use a device to deposit information tagged with a particular location as a marker, somewhat akin to a virtual footprint. This can be achieved by uploading the information from the device to an information network accessible by other devices, while leaving the marker as a tag that can be followed to the deposited information. That marker can then be seen and followed by a second user who comes to that location and views the marker through his or her own device, whereupon the marker can be activated or opened to retrieve the deposited information. It is similarly possible for a single user to deposit information at a particular location as a marker and to see and open the marker to access the deposited information upon returning to that location.

An extension of this concept is the creation of virtual objects, apparently positioned in physical space, that are left at a particular location for future access or reference by users of devices visiting that location. The virtual objects may thus provide information and services in the manner of a physical dispensing terminal like a vending machine or an ATM. These virtual objects can be branded like their physical counterparts so that a user's trust in and perception of the brand counteracts the lack of a physical presence in the virtual object.

By means of the invention, each user can visualise and enjoy a virtual environment such as a virtual streetscape, in which information resources and services are personalised and/or made relevant to the position of the user within the physical environment.

Many variations are possible within the inventive concept. An example mentioned briefly above is live transportation signage, in which the display of a device can act like a navigation system to give directions to a user. Another example mentioned briefly above is the presentation of educational information in an enjoyable and easy to use format.

Indeed, the invention can be embodied in numerous forms. Reference should therefore be made to conceptual statements herein such as the accompanying claims rather than to the foregoing specific description as indicating the scope of the invention.

## Claims

1. A method of accessing information on an information network accessible by a mobile communications device (12), comprising determining the location of the device (12) and tailoring the information supplied to a user (10) in accordance with that location, **characterised by** determining the orientation of the device (12) about a vertical axis and tailoring the information in accordance with that orientation wherein the vertical axis is defined by a line passing vertically through the device (10) at said location and providing a frame of reference to determine in which direction the device (10) is facing.

2. The method of Claim 1, wherein the orientation about a vertical axis is a compass bearing.

3. The method of Claim 1 or Claim 2, wherein the location of the device (12) is determined by GPS means or by triangulation from terrestrial transmitters.

4. The method of Claim 3, wherein location and/or orientation of the device (12) is further determined by measuring acceleration of the device (12).

5. The method of Claim 3 or Claim 4, wherein orientation of the device (12) is further determined about a horizontal axis wherein the horizontal axis is defined by a line passing horizontally through the device (12) at said location, providing a frame of reference to determine the elevation of the direction in which the device (10) is facing.

6. The method of any preceding Claim, wherein the device (12) determines its own location and/or orientation, or is programmed accordingly by the user (10) or by the network, and tailors the information requested from the network accordingly.

7. The method of Claim 6, wherein the device (12) looks up stored addresses of information resources, selects resource addresses appropriate to the location and/or orientation of the device (12), and requests access via the network to information resources at the selected addresses.

8. The method of any preceding Claim, wherein the location of the device (12) is determined independently of the device (12) and wherein the network supplies to the device (12) information held at selected resource addresses appropriate to the location of the device (12).

9. The method of any preceding Claim, wherein the device (12) stores information supplied by the network and in accordance with the orientation of the device (12), selects information from that stored information and supplies the selected stored information to the user (10).

10. The method of any preceding Claim, comprising grouping the information on the network into channels relating to respective user (10) requirements at a location and selecting among those channels to supply information in accordance with the respective user (10) requirements at that location.

11. The method of any preceding Claim, comprising supplying audio information to the user (10).

12. The method of any preceding Claim, comprising supplying visual information to the user (10).

13. The method of Claim 11 or Claim 12, comprising the user (10) viewing a subject such as a building, an object or an attraction and simultaneously receiving information 20 relating to the subject from the device (12).

14. The method of Claim 13, wherein the subject is viewed simultaneously with a display of the device (12) that supplies information relating to the subject.

15. The method of Claim 14, wherein the subject is viewed through the display.

16. The method of Claim 15, wherein the display overlays information upon the image of the subject viewed through the display.

17. The method of Claim 15 or Claim 16, wherein the subject is the physical environment visible through the display and wherein the information relating to the subject is a virtual object apparently placed in or otherwise associated with the physical environment at the location of the device (12).

18. The method of Claim 17, wherein the virtual object is a virtual terminal for the provision of a service or information, such as an ATM.

19. The method of Claim 17 or Claim 18, wherein the virtual object is a marker that can be activated to access an information deposit.

20. The method of Claim 19, wherein the deposited information is uploaded from a mobile communications device (12) to the network.

21. The method of Claim 20, wherein the deposited information is uploaded by another user (10).

22. The method of any preceding Claim, wherein the information is an advertisement.

23. The method of any preceding Claim, wherein the network is the Internet or an intranet, and wherein the information is held at URLs being the addresses of information resources on the network.

24. A mobile communications device (12) for accessing information on an information network, the device (12) comprising means for determining its location for use in tailoring the information supplied to a user (10) in accordance with that location **characterised by** means for determining its orientation about a vertical axis for use in tailoring the information supplied to a user (10) in accordance with that orientation wherein the vertical axis is defined by a line passing vertically through the device (10) at said location and providing a frame of reference to determine in which direction the device (10) is facing.

25. The device (12) of Claim 24, comprising GPS means or means for triangulation from terrestrial transmitters.

26. The device (12) of Claim 25, comprising an electronic compass.

27. The device (12) of any of Claims 24 to 27, comprising means for determining its orientation about a horizontal axis wherein the horizontal axis is defined by a line passing horizontally through the device (12) at said location, providing a frame of reference to determine the elevation of the direction in which the device (10) is facing.

28. The device (12) of any of Claims 24 to 28, comprising means for measuring its acceleration.

29. The device (12) of any of Claims 24 to 29, comprising means for determining its location and/or orientation either internally or by programming by the user (10) or by the network, and means for tailoring the information requested from the network accordingly.

30. The device (12) of Claim 29, comprising a stored look-up table of addresses of information resources, means for selecting from the look-up table resource addresses appropriate to the location and/or orientation of the device (12), and means for requesting access via the network to information resources at the selected addresses.

31. The device (12) of any of Claims 24 to 30, comprising means for receiving and storing information from the network held at selected resource addresses appropriate to the location of the device (12).

32. The device (12) of any of Claims 24 to 31, comprising memory means for storing information supplied by the network and selection means responsive to the orientation of the device (12) to select information from the stored information for supply to the user (10).

33. The device (12) of any of Claims 24 to 32, comprising means for selecting among channels that group the information on the network according to respective user (10) requirements at a location, and means for supplying information from the selected channel to the user (10).

34. The device (12) of any of Claims 24 to 33, and comprising a display through which a subject can be viewed.

35. The device (12) of Claim 34, wherein the display is adapted to overlay information upon the image of the subject viewed through the display.

36. The device (12) of Claim 34 or Claim 35, wherein the display is adapted to display information in the form of a virtual object apparently placed in or otherwise associated with the subject being the physical environment at the location of the device (12).

37. . The device (12) of Claim 36, comprising means for accessing a deposit of information marked by the virtual object.

38. The device (12) of Claim 37, comprising means for uploading the deposited information to the network.

## Patentansprüche

1. Ein Verfahren zum Zugriff auf ein Informationsnetzwerk über ein mobiles Kommunikationsgerät (12), umfassend das Bestimmen des Standorts des Geräts (12) und das Anpassen der an einen Benutzer (10) gelieferten Information in Übereinstimmung mit diesem Standort, **gekennzeichnet durch** das Bestimmen der Ausrichtung des Geräts (12) um eine senkrechte Achse und das Anpassen der Information in Übereinstimmung mit dieser Ausrichtung, wobei die senkrechte Achse **durch** eine Linie definiert wird, die senkrecht **durch** das Gerät (12) an diesem Standort verläuft und einen Bezugsrahmen bereitstellt, um zu bestimmen, in welche Richtung das Gerät (12) weist.

2. Verfahren nach Anspruch 1, wobei die Ausrichtung um eine vertikale Achse eine Kompasspeilung ist.

3. Verfahren nach Anspruch 1 oder 2, wobei der Standort des Geräts (12) durch GPS-Mittel oder durch Triangulierung von terrestrischen Sendern aus bestimmt wird.

4. Verfahren nach Anspruch 3, wobei der Standort und/oder die Ausrichtung des Geräts (12) weiter durch Messen der Beschleunigung des Geräts (12) bestimmt wird.

5. Verfahren nach Anspruch 3 oder 4, wobei die Ausrichtung des Geräts (12) weiterhin um eine waagerechte Achse bestimmt wird, wobei die waagerechte Achse durch eine Linie definiert wird, die waagerecht durch das Gerät (12) an diesem Standort verläuft und einen Bezugsrahmen bereitstellt, um die Erhebung der Richtung, in die das Gerät (12) weist, zu bestimmen.

6. Verfahren nach einem der vorhergehenden Ansprüche, wobei das Gerät (12) seinen eigenen Standort und/oder seine Ausrichtung bestimmt, oder vom Benutzer (10) oder vom Netzwerk entsprechend programmiert wird und die vom Netzwerk angeforderte Information entsprechend anpasst.

7. Verfahren nach Anspruch 6, wobei das Gerät (12) gespeicherte Adressen von Informationsquellen nachschlägt, Quellenadressen entsprechend des Standorts und/oder der Ausrichtung des Geräts (12) auswählt und Zugriff über das Netzwerk auf Informationsquellen der ausgewählten Adressen anfordert.

8. Verfahren nach einem der vorhergehenden Ansprüche, wobei der Standort des Geräts (12) unabhängig vom Gerät (12) bestimmt wird, und wobei das Netzwerk an das Gerät (12) Information liefert, die an ausgewählten Quellenadressen entsprechend des Standorts des Geräts (12) gehalten wird.

9. Verfahren nach einem der vorhergehenden Ansprüche, wobei das Gerät (12) vom Netzwerk gelieferte Information und in Übereinstimmung mit der Ausrichtung des Geräts (12) speichert, Information aus dieser gespeicherten Information auswählt und die ausgewählte gespeicherte Information an den Benutzer (10) liefert.

10. Verfahren nach einem der vorhergehenden Ansprüche, umfassend die Gruppierung der im Netzwerk gehaltenen Information in Kanäle, die auf entsprechende Benutzer-(10)-Anforderungen an einem Standort bezogen sind, und die Auswahl aus diesen Kanälen, um Information in Überstimmung mit den entsprechenden Benutzer-(10)-Anforderungen an diesem Standort zu liefern.

11. Verfahren nach einem der vorhergehenden Ansprüche, umfassend die Lieferung von Audioinformation an den Benutzer (10).

12. Verfahren nach einem der vorhergehenden Ansprüche, umfassend die Lieferung von visueller Information an den Benutzer (10).

13. Verfahren nach einem der Ansprüche 11 oder 12, umfassend das Betrachten eines Gegenstands wie ein Gebäude, ein Objekt oder eine Attraktion und das gleichzeitige Empfangen von auf den Gegenstand bezogene Information durch den Benutzer (10).

14. Verfahren nach Anspruch 13, wobei der Gegenstand gleichzeitig auf einem Display des Geräts (12) betrachtet wird, welches auf den Gegenstand bezogene Information liefert.

15. Verfahren nach Anspruch 14, wobei der Gegenstand durch das Display hindurch betrachtet wird.

16. Verfahren nach Anspruch 15, wobei das Display Information auf dem Bild des Gegenstands überlagert, welcher durch das Display hindurch betrachtet wird.

17. Verfahren nach Anspruch 15 oder 16, wobei der Gegenstand die durch das Display hindurch sichtbare physikalische Umgebung ist, und wobei die auf den Gegenstand bezogene Information ein virtuelles Objekt ist, welches anscheinend in die physikalische Umgebung am Standort des Geräts (12) plaziert oder in anderer Weise mit ihr assoziiert ist.

18. Verfahren nach Anspruch 17, wobei das virtuelle Objekt ein virtuelles Terminal zur Bereitstellung eines Dienstes oder einer Information, wie beispielsweise ein ATM, ist.

19. Verfahren nach Anspruch 17 oder 18, wobei das virtuelle Objekt eine Markierung ist, die aktiviert werden kann, um auf die abgelagerte Information zuzugreifen.

20. Verfahren nach Anspruch 19, wobei die abgelagerte Information von einem mobilen Kommunikationsgerät (12) auf das Netzwerk hochgeladen wird.

21. Verfahren nach Anspruch 20, wobei die abgelagerte Information von einem anderen Benutzer (10) hochgeladen wird.

22. Verfahren nach einem der vorhergehenden Ansprüche, wobei die Information eine Werbeanzeige ist.

23. Verfahren nach einem der vorhergehenden Ansprüche, wobei das Netzwerk das Internet oder ein Intranet ist, und wobei die Information in URLs gehalten wird, die die Adressen der Informationsquellen im Netzwerk darstellen.

24. Ein mobiles Kommunikationsgerät (12) zum Zugriff auf Information in einem Informationsnetzwerk, welches Gerät (12) Mittel zur Bestimmung seines Standorts umfasst, die dazu verwendet werden, die an einen Benutzer (10) gelieferte Information in Übereinstimmung mit diesem Standort anzupassen, **gekennzeichnet durch** Mittel zur Bestimmung seiner Ausrichtung um eine senkrechte Achse zum Einsatz bei der Anpassung der an einen Benutzer (10) in Übereinstimmung mit dieser Ausrichtung gelieferten Information, wobei die vertikale Achse **durch** eine Linie definiert wird, die senkrecht an diesem Standort durch das Gerät (12) verläuft und einen Bezugsrahmen zur Bestimmung der Richtung, in die das Gerät (12) weist, bietet.

25. Gerät (12) nach Anspruch 24, umfassend GPS-Mittel oder Mittel zur Triangulierung von terrestrischen Sendern aus.

26. Gerät (12) nach Anspruch 24, umfassend einen elektronischen Kompass.

27. Gerät (12) nach einem der Ansprüche 24 bis 27, umfassend Mittel zur Bestimmung seiner Ausrichtung um eine waagerechte Achse, wobei die waagerechte Achse durch eine Linie definiert wird, die waagerecht an diesem Standort durch das Gerät (12) verläuft und einen Bezugsrahmen zur Bestimmung der Erhebung der Richtung, in die das Gerät (12) weist, bietet.

28. Gerät (12) nach einem der Ansprüche 24 bis 28, umfassend Mittel zum Messen seiner Beschleunigung.

29. Gerät (12) nach einem der Ansprüche 24 bis 29, umfassend Mittel zum Bestimmen seines Standorts und/oder seiner Ausrichtung entweder intern oder durch Programmierung durch den Benutzer (10) oder durch das Netzwerk, und Mittel zum entsprechenden Anpassen der vom Netzwerk angeforderten Information.

30. Gerät (12) nach Anspruch 29, umfassend eine gespeicherte Nachschlagetabelle mit Adressen von Informationsquellen, Mittel zur Auswahl von Quellenadressen aus der Nachschlagetabelle entsprechend des Standorts und/oder der Ausrichtung des Geräts (12) und Mittel zur Anforderung des Zugriffs über das Netzwerk auf Informationsquellen an den ausgewählten Adressen.

31. Gerät (12) nach einem der Ansprüche 24 bis 30, umfassend Mittel zum Empfang und zum Speichern von Information vom Netzwerk, die an ausgewählten Quellenadressen entsprechend des Standorts des Geräts (12) gehalten wird.

32. Gerät (12) nach einem der Ansprüche 24 bis 31, umfassend Speichermittel zum Speichern der vom Netzwerk gelieferten Information und Auswahlmittel, die auf die Ausrichtung des Geräts (12) ansprechen, um Information aus der gespeicherten Information zur Lieferung an den Benutzer (10) auszuwählen.

33. Gerät (12) nach einem der Ansprüche 24 bis 32, umfassend Mittel zur Auswahl aus den Kanälen, die die Information im Netzwerk gemäß den betreffenden Benutzer-(10)-Anforderungen an einem Standort gruppieren, und Mittel zur Lieferung der Information aus dem ausgewählten Kanal an den Benutzer (10).

34. Gerät (12) nach einem der Ansprüche 24 bis 33, und umfassend ein Display, durch welches ein Gegenstand betrachtet werden kann.

35. Gerät (12) nach Anspruch 34, wobei das Display darauf eingerichtet ist, Information auf dem Bild des Gegenstands, der durch das Display hindurch betrachtet wird, zu überlagern.

36. Gerät (12) nach Anspruch 34 oder 35, wobei das Display darauf eingerichtet ist, Information in Form eines virtuellen Objekts anzuzeigen, welches anscheinend in den Gegenstand plaziert oder in anderer Weise mit ihm assoziiert ist, wobei der Gegenstand die physikalische Umgebung am Standort des Geräts (12) ist.

37. Gerät (12) nach Anspruch 36, umfassend Mittel zum Zugriff auf eine Ablagerung von durch ein virtuelles Objekt markierter Information.

38. Gerät (12) nach Anspruch 37, umfassend Mittel zum Hochladen der abgelagerten Information auf das Netzwerk.

## Revendications

1. Procédé d'accès à des informations sur un réseau d'informations accessible par un dispositif de communication mobile (12), comprenant les étapes gui consistent à déterminer la localisation du dispositif (12) et à personnaliser les informations fournies à un utilisateur (10) en fonction de cette localisation, **caractérisé par** les étapes qui consistent à déterminer l'orientation du dispositif (12) autour d'un axe vertical et à personnaliser les informations en fonction de cette orientation, où l'axe vertical est défini par une ligne passant verticalement à travers le dispositif (10) à ladite localisation et fournissant une trame de référence pour déterminer dans quelle direction regarde le dispositif (10).

2. Procédé selon la revendication 1, dans lequel l'orientation autour d'un axe vertical est un relèvement au compas.

3. Procédé selon la revendication 1 ou la revendication 2, dans lequel la localisation du dispositif (12) est déterminée par des moyens GPS ou par une triangulation à partir d'émetteurs terrestres.

4. Procédé selon la revendication 3, dans lequel la localisation et/ou l'orientation du dispositif (12) est, en outre, déterminée par une mesure de l'accélération du dispositif (12).

5. Procédé selon la revendication 3 ou la revendication 4, dans lequel l'orientation du dispositif (12) est, en outre, déterminée autour d'un axe horizontal, où l'axe horizontal est défini par une ligne passant horizontalement à travers le dispositif (12) à ladite localisation et fournissant une trame de référence pour déterminer l'élévation de la direction dans laquelle regarde le dispositif (10).

6. Procédé selon l'une quelconque des revendications précédentes, dans lequel le dispositif (12) détermine sa propre localisation et/ou orientation, ou est programmé en conséquence par l'utilisateur (10) ou par le réseau, et personnalise les informations demandées en conséquence au réseau.

7. Procédé selon la revendication 6, dans lequel le dispositif (12) examine des adresses stockées de ressources d'informations, sélectionne des adresses de ressources en adéquation avec la localisation et/ou l'orientation du dispositif (12), et demande un accès, via le réseau, aux ressources d'informations présentes aux adresses sélectionnées.

8. Procédé selon l'une quelconque des revendications précédentes, dans lequel la localisation du dispositif (12) est déterminée indépendamment du dispositif (12), et dans lequel le réseau fournit au dispositif (12) des informations contenues à des adresses de ressources sélectionnées, en adéquation avec la localisation du dispositif (12).

9. Procédé selon l'une quelconque des revendications précédentes, dans lequel le dispositif (12) stocke des informations fournies par le réseau, sélectionne des informations parmi ces informations stockées, en fonction de l'orientation du dispositif (12), et fournit les informations stockées sélectionnées à l'utilisateur (10).

10. Procédé selon l'une quelconque des revendications précédentes, comprenant les étapes qui consistent à regrouper les informations sur le réseau en canaux associés aux exigences d'un utilisateur (10) respectif, à une localisation, et à sélectionner l'un de ces canaux pour fournir les informations en fonction des exigences dudit utilisateur (10) à cette localisation.

11. Procédé selon l'une quelconque des revendications précédentes, comprenant la fourniture d'informations audio à l'utilisateur (10).

12. Procédé selon l'une quelconque des revendications précédentes, comprenant la fourniture d'informations visuelles à l'utilisateur (10).

13. Procédé selon la revendication 11 ou la revendication 12, comprenant le fait que l'utilisateur (10) regarde un sujet tel qu'un bâtiment, un objet ou une attraction, et reçoit simultanément, du dispositif (12), des informations 20 concernant le sujet.

14. Procédé selon la revendication 13, dans lequel le sujet est regardé simultanément avec un écran d'affichage du dispositif (12) qui fournit des informations concernant l'objet.

15. Procédé selon la revendication 14, dans lequel le sujet est regardé à travers l'écran d'affichage.

16. Procédé selon la revendication 15, dans lequel l'écran d'affichage superpose des informations sur l'image du sujet regardé à travers l'écran d'affichage.

17. Procédé selon la revendication 15 ou la revendication 16, dans lequel le sujet est l'environnement physique visible à travers l'écran d'affichage, et dans lequel les informations concernant le sujet sont un objet virtuel qui semble être placé dans l'environnement physique, ou être autrement associé à cet environnement, sur le lieu auquel se trouve le dispositif (12).

18. Procédé selon la revendication 17, dans lequel l'objet virtuel est un terminal virtuel permettant la fourniture d'un service ou d'informations, tel qu'un GAB.

19. Procédé selon la revendication 17 ou la revendication 18, dans lequel l'objet virtuel est un marqueur qui peut être activé pour l'accès à un dépôt d'informations.

20. Procédé selon la revendication 19, dans lequel les informations déposées sont chargées depuis un dispositif de communication mobile (12) sur le réseau.

21. Procédé selon la revendication 20, dans lequel les informations déposées sont chargées par un autre utilisateur (10).

22. Procédé selon l'une quelconque des revendications précédentes, dans lequel les informations sont une publicité.

23. Procédé selon l'une quelconque des revendications précédentes, dans lequel le réseau est le réseau Internet ou un intranet, et dans lequel les informations sont conservées à des adresses URL, qui sont les adresses des ressources d'informations sur le réseau.

24. Dispositif de communication mobile (12) pouvant accéder à des informations sur un réseau d'informations, le dispositif (12) comprenant des moyens pour déterminer sa localisation, afin de personnaliser les informations fournies à un utilisateur (10) en fonction de cette localisation, **caractérisé par** des moyens servant à déterminer son orientation autour d'un axe vertical, afin de personnaliser les informations fournies à un utilisateur en fonction de cette orientation, où l'axe vertical est défini par une ligne passant verticalement à travers le dispositif (10) à ladite localisation et fournissant une trame de référence pour déterminer dans quelle direction regarde le dispositif (10).

25. Dispositif (12) selon la revendication 24, comprenant des moyens GPS ou des moyens de triangulation à partir d'émetteurs terrestres.

26. Dispositif (12) selon la revendication 25, comprenant un compas électronique.

27. Dispositif (12) selon l'une quelconque des revendications 24 à 26, comprenant des moyens pour déterminer son orientation autour d'un axe horizontal, où l'axe horizontal est défini par une ligne passant horizontalement à travers le dispositif (12) à ladite localisation et fournissant une trame de référence pour déterminer l'élévation de la direction dans laquelle regarde le dispositif (10).

28. Dispositif (12) selon l'une quelconque des revendications 24 à 27, comprenant des moyens pour mesurer son accélération.

29. Dispositif (12) selon l'une quelconque des revendications 24 à 28, comprenant des moyens pour déterminer sa localisation et/ou son orientation, de manière interne ou bien par programmation par l'utilisateur (10) ou par le réseau, et des moyens pour personnaliser les informations demandées en conséquence au réseau.

30. Dispositif (12) selon la revendication 29, comprenant une table de correspondance, stockée, d'adresses de ressources d'informations, des moyens pour sélectionner, dans la table de correspondance, des adresses de ressources en adéquation avec la localisation et/ou l'orientation du dispositif (12), et des moyens pour demander un accès, via le réseau, aux ressources d'informations présentes aux adresses sélectionnées.

31. Dispositif (12) selon l'une quelconque des revendications 24 à 30, comprenant des moyens pour recevoir et stocker des informations, provenant du réseau, conservées aux adresses de ressources sélectionnées en adéquation avec la localisation du dispositif (12).

32. Dispositif (12) selon l'une quelconque des revendications 24 à 31, comprenant des moyens de mémorisation pour stocker les informations fournies par le réseau, et des moyens de sélection répondant à l'orientation du dispositif (12) pour sélectionner, parmi les informations stockées, les informations à fournir à l'utilisateur (10).

33. Dispositif (12) selon l'une quelconque des revendications 24 à 32, comprenant des moyens pour faire une sélection parmi plusieurs canaux qui regroupent les informations sur le réseau, en fonction des exigences d'un utilisateur (10) respectif à une localisation, et des moyens pour fournir à l'utilisateur (10) les informations se trouvant sur le canal sélectionné.

34. Dispositif (12) selon l'une quelconque des revendications 24 à 33, comprenant un écran d'affichage à travers lequel un sujet peut être regardé.

35. Dispositif (12) selon la revendication 34, dans lequel l'écran d'affichage est adapté pour superposer des informations sur l'image du sujet regardé à travers l'écran d'affichage.

36. Dispositif (12) selon la revendication 34 ou la revendication 35, dans lequel l'écran d'affichage est adapté pour afficher des informations sous la forme d'un objet virtuel qui semble être placé dans le sujet formant l'environnement physique, ou être autrement associé à ce sujet, sur le lieu auquel se trouve le dispositif (12).

37. Dispositif (12) selon la revendication 36, comprenant des moyens permettant l'accès à un dépôt d'informations marqué par l'objet virtuel.

38. Dispositif (12) selon la revendication 37, comprenant des moyens permettant de charger les informations déposées sur le réseau.
